# EUROPÄISCHE PATENTSCHRIFT

(11) **EP 1 030 887 B1**
(45) Veröffentlichungstag und Bekanntmachung des Hinweises auf die Patenterteilung: **24.07.2002**
(21) Anmeldenummer: 98955550.3
(22) Anmeldetag: 06.11.1998
(51) Int. Cl.: C08L 67/02, C08L 69/00

(54) **SCHLAGZÄH MODIFIZIERTE POLYESTER UND POLYESTER/POLYCARBONAT-BLENDS**
IMPACT-RESISTANT MODIFIED POLYESTERS AND POLYESTER/POLYCARBONATE BLENDS
POLYESTER MODIFIE RESISTANT AUX CHOCS ET MELANGES POLYESTER/POLYCARBONATE

(30) Priorität: 14.11.1997 DE 19750627
(43) Veröffentlichungstag der Anmeldung: 30.08.2000
(73) Patentinhaber: BASF AKTIENGESELLSCHAFT, 67056 Ludwigshafen (DE)
(72) Erfinder: WEBER, Martin, D-67487 Maikammer (DE); FISCHER, Michael, D-67071 Ludwigshafen (DE); BLINNE, Gerd, D-67273 Bobenheim (DE)
(74) Vertreter: Isenbruck, Günter, Dr.
(86) Internationale Anmeldenummer: EP9807112
(87) Internationale Veröffentlichungsnummer: WO9925770

(56) Entgegenhaltungen:
- WO-A-97/01588

## Beschreibung

Die Erfindung betrifft schlagzäh modifizierte Polyester und Polyester/Polycarbonat-Blends.

Polymermischungen finden in der Technik zunehmendes Interesse, da sie maßgeschneiderte Eigenschaftskombinationen bieten. Von besonderem Interesse sind dabei Polymermischungen aus unverträglichen Polymeren, die ungewöhnliche Eigenschaftskombinationen aufweisen.

Polymermischungen auf Basis von Polyestern und Polycarbonaten sind seit langer Zeit bekannt. Die technisch wichtigen Produkte enthalten zur Vefbesserung der Zähigkeit, insbesondere bei tiefen Temperaturen, auch Schlagzähmodifier, wobei insbesondere Butadien-Styrol-Methylmethacrylat-Kautschuke, Butylkautschuk, Acrylät-Propfkautschuke und Ethylencopolymere mit polaren Comonomeren eingesetzt werden.

In US 4,764,556 sind thermoplastische Formmassen beschrieben, die einen Blend aus zwei unterschiedlichen Polyestern, einem Polycarbonat und einem kautschukelastischen Polymer mit einer Glasübergangstemperatur von weniger als -30°C enthalten. Als Kautschukkomponente kommen ein Ethylen/n-Butylacrylat/Acrylsäure-Copolymer, Ethylen/n-Butylacrylat-Glycidylmethacrylat-Copolymer oder ein Pfropfcopolymer zur Anwendung, das eine Schale aus Styrol/-Acrylnitril oder Methylmethacrylat aufweist.

Aus der JP-A 83/098 357 sind Formmassen bekannt, die Polycarbonat, einen aromatischen Polyester, einen Butylkautschuk und ein acrylisches Elastomer aufweisen. Der Butylkautschuk wird vorzugsweise aus Isobuten und Isopren erhalten. Das acrylische Elastomer wird vorzugsweise durch Emulsionspolymerisation von Alkylacrylaten, Butadien und Methylmethacrylat erhalten.

Aus der DE-A 33 02 124 sind thermoplastische Formmassen bekannt, die Polycarbonate, Polyalkenylterephthalate, kautschukelastische Propfpolymerisate und Terpolymerisate aus Acrylsäureester, Vinylester und ungesättigten Nitrilen enthalten.

Aus der EP-B 0 133 993 sind Harzmischungen bekannt, die einen Polyester, ein Polycarbonat und eine Reglerkombination umfassen. Die Reglerkombination enthält ein Pfropfcopolymer mit einem Kern aus Alkylacrylat und Olefincopolymere, die Alkylacrylat, Alkymethacrylat, Acrylsäure, Meth-acrylsäure oder Gemische davon enthalten.

Blends auf Basis von Polyestern und Styrolcopolymeren sind ebenfalls bekannt.

In der EP-A-0 310 976 sind glasfaserverstärkte thermoplastische Formmassen auf der Basis von Polyestern und Pfropfpolymerisaten und deren Herstellung beschrieben. Die Formmassen enthalten neben Polyestern und Styrol/Acrylnitril-Copolymeren auf Acrylatkautschuken basierende Pfropfpolymerisate.

Weiterhin sind Mischungen aus Polyestern und mindestens 2 Kautschuken unterschiedlicher Partikelgröße, welche sich durch gute Zähigkeit auszeichnen, aus der DE-A-37 33 839 bekannt.

Um den immer komplexer werdenden Anforderungen an Polymermischungen gerecht zu werden, besteht Bedarf an verbesserten Polymermischungen auf Basis von Polyestern und gegebenenfalls Polycarbonaten und/oder Styrolcopolymeren, die sich durch gute Tieftemperaturzähigkeit, gute Dimensionsbeständigkeit und Witterungsbeständigkeit auszeichnen.

Aufgabe der vorliegenden Erfindung ist die Bereitstellung von thermoplastischen Formmassen, die Polyester und gegebenenfalls Polycarbonate und/oder Styrolcopolymere aufweisen, die die Nachteile bekannter Formmassen vermeiden und insbesondere eine gute Wärmeformbeständigkeit, Witterungsbeständigkeit und Dimensionsbeständigkeit aufweisen. Sie sollen zudem auch eine gute Kerbschlagzähigkeit besitzen.

Die Aufgabe wird erfindungsgemäß gelöst durch Bereitstellung von thermoplastischen Formmassen, enthaltend, bezogen auf das Gesamtgewicht der Komponenten A, C und gegebenenfalls B, D bis G, das insgesamt 100 Gew.-% ergibt
a: 1 bis 99 Gew.-% mindestens eines Polyesters mit einer relativen Viskosität von 1,2 bis 1,8 als Komponente A,
b: 0 bis 98 Gew.-% mindestens eines Polycarbonats mit einer relativen Viskosität von 1,10 bis 1,50 als Komponente B,
c: 1 bis 80 Gew.-% eines Pfropfcopolymerisats C aus den Komponenten C1, C2 und C3, deren Gesamtgewicht 100 Gew.-% ergibt,
c1: 1 bis 95 Gew.-% einer Pfropfgrundlage aus einem Material mit einer Glasübergangstemperatur von mindestens 25°C und einer mittleren Teilchengröße von mindestens 50 nm und einem Gelgehalt von mindestens 90 % als Komponente C1, aufgebaut aus den Komponenten C11 bis C14, deren Gesamtgewicht 100 Gew.-% ergibt,
   c11: 50 bis 99,9 Gew.-% mindestens eines vinylaromatischen Monomeren als Komponente C11,
   c12: 0 bis 49,9 Gew.-% mindestens eines mit den Monomeren C11 copolymerisierbaren Monomeren als Komponente C12,
   c13: 0,1 bis 25 Gew-% einer Vemetzerkomponente C13 aus
      α) 0,1 bis 100 Gew.-% Dihydrodicyclopentadienylacrylat und
      β) 0 bis 99,9 Gew.-% mindestens eines weiteren Vernetzers, ausgewählt aus ethylenisch ungesättigten Monomeren, die Epoxy-, Hydroxy-, Carboxyl-, Amino- oder Säureanhydridgruppen tragen, (Meth)allylmethacrylat und (Meth)acryloylalkoxysilanen der allgemeinen Formel (III)

         H₂C = CR²-C(O)O-(CH₂)ₚ-SiR¹O₍₃₋ₙ₎₂ (III)

         worin R¹ C₁₋₃-Alkyl oder Phenyl, R² Wasserstoff oder Methyl bedeutet und n eine ganze Zahl von 0 bis 2 und p eine ganze Zahl von 1 bis 6 bedeutet, mit zwei oder mehr funktionellen Gruppen unterschiedlicher Reaktivität und
   c14: 0 bis 25 Gew.-% mindestens eines Vernetzers C14 mit zwei oder mehr funktionellen Gruppen gleicher Reaktivität,
c2: 4,9 bis 98,9 Gew.-% einer Pfropfauflage mit einer Glasübergangstemperatur von höchstens 0°C als Komponente C2, aufgebaut aus den Komponenten C21 bis C23, deren Gesamtgewicht 100 Gew.-% ergibt,
   c21: 50 bis 100 Gew.-% mindestens eines C₁₋₈-Alkyl(meth)acrylates als Komponente C21,
   c22: 0 bis 50 Gew.-% mindestens eines mit den Monomeren C21 copolymerisierbaren Monomeren als Komponente C22 und
   c23: 0 bis 20 Gew-% mindestens eines Vernetzers C13 α und/oder β oder deren Mischung, und
c3: 0,1 bis 90 Gew.-% mindestens einer weiteren Pfropfauflage aus Styrol und Acrylnitril als Komponente C3,
d: 0 bis 80 Gew.-% mindestens eines halogenfreien Styrolcopolymers mit einer Viskositätszahl von 40 bis 160 als Komponente D,
e: 0 bis 30 Gew.-% mindestens eines Kautschuks als Komponente E,
f: 0 bis 60 Gew.-% mindestens eines faser- oder teilchenförmigen Füllstoffs als Komponente F und
g: 0 bis 20 Gew.-% weitere Zusatzstoffe als Komponente G

Es wurde gefunden, daß der Zusatz der speziellen Pfropfcopolymerisate der Komponente C den Formmassen die vorteilhaften Eigenschaften verleiht.

Die erfindungsgemäßen Formmassen können für eine Vielzahl von Anwendungen eingesetzt werden, beispielsweise zur Herstellung von Formkörpern für Haushaltsartikel, Kraftfahrzeuganwendungen, elektronische Bauteile und medizinisch-technische Geräte.

Nachstehend werden die einzelnen Komponenten näher erläutert.

### Komponente A

Die Polyester der Komponente A sind in den thermoplastischen Formmassen in einer Menge von 1 bis 99 Gew.-% enthalten. Enthalten die Formmassen Polycarbonate B, so liegt Komponente A vorzugsweise in einer Menge von 15 bis 80 Gew.-%, besonders bevorzugt von 20 bis 70 Gew.-% vor. Liegt kein Polycarbonat der Komponente B vor, so beträgt der Anteil der Komponente A vorzugsweise 25 bis 88 Gew.-%, besonders bevorzugt 40 bis 77 Gew.-%.

Vorzugsweise leitet sich der Polyester von einer aromatischen Dicarbonsäure ab.

Dabei kann der aromatische Ring der Dicarbonsäure weiter substituiert sein, beispielsweise durch Halogen, wie Chlor oder Brom, oder C₁₋₄-Alkyl, wie Methyl, Ethyl, Isopropyl, n-Propyl, n-Butyl, i-Butyl oder tert-Butyl. Die aromatischen Dicarbonsäuren können o-, m-, oder p-Dicarbonsäuren oder Gemische davon sein. Vorzugsweise handelt es sich um p-Dicarbonsäuren. Bevorzugte Dicarbonsäuren sind Naphthalindicarbonsäure, Terephthalsäure und Isophthalsäure, sowie Gemische davon. Bis zu 10 mol-% der aromatischen Dicarbonsäuren können dabei durch aliphatische oder cycloaliphatische Dicarbonsäuren ersetzt sein, wie Adipinsäure, Acelainsäure, Sebazinsäure, Dodecandisäuren und Cyclohexandicarbonsäuren. Es können auch nur aliphatische Dicarbonsäuren eingesetzt werden, was erfindungsgemäß jedoch nicht bevorzugt ist.

Als aliphatische Dihydroxyverbindungen kommen insbesondere Diole mit 2 bis 6 Kohlenstoffatomen in Betracht, insbesondere 1,2-Ethandiol, 1,4-Butandiol, 1,6-Hexandiol, 1,4-Hexandiol, 1,4-Cyclohexandiol, Neopentylglykol und Gemische davon. Verwendbare aromatische Dihydroxyverbindungen sind beispielsweise solche auf Basis von Diphenolen der allgemeinen Formel I

HO-H₄C₆-A-C₆H₄-OH (I)

worin A eine Einfachbindung, C₁₋₃-Alkylen-, eine C₂₋₃-Alkyliden-, C₃₋₆-Cycloalkylidengruppe, die mit bis zu 4 Alkylresten substituiert sein kann, und insbesondere eine 2,2,4-Trimethylcyclohexylidengruppe ist, oder S oder SO₂ bedeutet. Bevorzugte Diphenole der Formel I sind beispielsweise 4,4'-Dihydroxydiphenyl, 2,2-Bis-(4-hydroxyphenyl)propan, 2,4-Bis-(4-hydroxyphenyl)2-methylbutan, 1,1-Bis(4-hydroxyphenyl)cyclohexan und Bisphenol-TMC. Besonders bevorzugt sind 2,2-Bis(4-hydroxyphenyl)propan und 1,1-Bis(4-hyxdroxyphenyl)cyclohexan.

Besonders bevorzugte Polyester sind Polyalkylenterephthalate, die sich von Alkandiolen mit 2 bis 6 Kohlenstoffatomen ableiten. Insbesondere bevorzugt sind Polyethylenterephthalat und Polybutylenterephthalat.

Die relative Viskosität der Polyester A beträgt in der Regel 1,2 bis 1,8, gemessen als 0,5 Gew.-%ige Lösung in einem Phenol/o-Dichlorbenzol-Gemisch (Gewichtsverhältnis 1:1) bei 25°C.

### Komponente B

Als Komponente B können die erfindungsgemäßen thermoplastischen Formmassen mindestens ein Polycarbonat in einer Menge von 0 bis 98 Gew.-%, vorzugsweise 15 bis 80 Gew.-%, insbesondere 19,5 bis 69,5 Gew.-% enthalten. Die thermoplastischen Formmassen können jedoch auch frei von Polycarbonaten sein. Das Polycarbonat ist dabei vorzugsweise ein aromatisches Polycarbonat. Das Polycarbonat ist ferner vorzugsweise halogenfrei. Geeignete halogenfreie Polycarbonate sind beispielsweise solche auf Basis von Diphenolen der vorstehenden allgemeinen Formel I. Sowohl Homopolycarbonate als auch Copolycarbonate sind als Komponente B geeignet, bevorzugt sind neben dem Bisphenol-A-Homopolymerisat die Copolycarbonate von Bisphenol A, insbesondere die Copolycarbonate auf Basis Bisphenol A und Bisphenol-TMC. Weitere bevorzugte Beispiele geeigneter Diphenole sind Hydrochinon und Resorcin.

Weitere geeignete Diphenole sind beschrieben in H. Schnell, Chemistry and Physics of Polycarbonates, Interscience Publishers, 1964, sowie in US 2,999,835 und DE-A 22 48 817. Verfahren zur Herstellung von Polycarbonaten sind beispielsweise beschrieben in der US 2,999,835, DE-A 22 48 817, DE-A 13 00 266 und DE-A 14 95 730.

Die geeigneten Polycarbonate können in bekannter Weise verzweigt sein, und zwar vorzugsweise durch Einbau von 0,05 bis 2,0 Mol-%, bezogen auf die Summe der eingesetzten Diphenole, an mindestens trifunktionellen Verbindungen, beispielsweise solchen mit 3 oder mehr als 3 phenolischen OH-Gruppen.

Als besonders geeignet haben sich Polycarbonate erwiesen, die relative Viskositäten von 1,10 bis 1,50, insbesondere von 1,25 bis 1,40 aufweisen. Dies entspricht mittleren Molekulargewichten M_{w} (Gewichtsmittelwert) von 10000 bis zu 200000, vorzugsweise von 20000 bis 80000.

Die Herstellung der Polycarbonate kann beispielsweise durch Umsetzung der Diphenole mit Phosgen, nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenab-brechern erzielt wird. Polydiorganoxiloxanhaltige Polycarbonate sind beispielsweise in der DE-A 33 34 782 beschrieben. Geeignete Kettenabrecher sind beispielsweise Phenol, p-tert.-Butylphenol, aber auch langkettige Alkyl-phenole, wie 4-(1,3-Tetramethylbutyl)phenol gemäß DE-A 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-tert.-Butylphenol, p-tert.-Octylphenol, p-Dodecylphenol, 2-(3,5-Dimethylheptyl)phenol und 4-(3,5-Dimethylheptyl)phenol.

Halogenfreie Polycarbonate im Sinne der vorliegenden Erfindung bedeutet, daß die Polycarboante aus halogenfreien Diphenolen, halogenfreien Kettenabrechern und gegebenenfalls halogenfreien Verzweigern aufgebaut sind, wobei der Gehalt untergeordneter ppm-Mengen an verseifbarem Chlor, resultierend beispielsweise aus der Herstellung der Polycarbonate mit Phosgen nach dem Phasengrenzflächenverfahren nicht als halogenhaltig im Sinne der Erfindung anzusehen ist. Derartige Polycarbonate mit ppm-Gehalten an verseifbarem Chlor sind halogenfreie Polycarbonate im Sinne der vorliegenden Erfindung.

### Komponente C

Die Pfropfcopolymerisate der Komponente C sind in den thermoplastischen Forrnmassen in einer Menge von 1 bis 80 Gew.-% enthalten. In Formmassen, die keine Polycarbonate der Komponente B enthalten, sind sie vorzugsweise in einer Menge von 2 bis 40 Gew.-%, besonders bevorzugt 3 bis 30 Gew.-% enthalten. Liegt ein Polycarbonat der Komponente B vor, so sind sie vorzugsweise in einer Menge von 5 bis 50 Gew.-%, besonders bevorzugt 10 bis 15 Gew.-% enthalten.

Geeignete Pfropfcopolymerisate C sind beispielsweise in der WO 97/01588 beschrieben oder wie folgt aufgebaut:

Die Pfropfgrundlage C1 besteht aus einem Material, das eine Glasübergangstemperatur von mindestens 25°C, bevorzugt mindestens 50°C, insbesondere von 80 bis 130°C aufweist.

Die Pfropfgrundlage C1 ist aufgebaut aus von 50 bis 99,8 Gew.-%, bevorzugt von 60 bis 99 Gew.-%, besonders bevorzugt von 60 bis 98 Gew.-%, bezogen auf die Komponenten C11 bis C14, mindestens eines vinylaromatischen Monomeren C11. Beispiele für vinylaromatische Monomere sind Styrol, α-Methylstyrol oder kernalkylierte Styrole wie p-Methylstyrol oder p-t-Butylstyrol. Besonders bevorzugt werden Styrol, α-Methylstyrol oder p-Methylstyrol oder deren Mischungen eingesetzt. Ganz besonders bevorzugt wird Styrol verwendet.

Die Komponente C1 kann neben den Monomeren C11 auch damit copolymerisierbare Monomere C12 enthalten. Als Beispiele derartiger Monomere seien Acrylnitril, Methacrylnitril, Acrylsäure, Methacrylsäure, Methylmethacrylat, Glycidylmethacrylat, Maleinsäureanhydrid oder Vinylmethylether zu nennen. Selbstverständlich können auch Mischungen unterschiedlicher Monomere C12 eingesetzt werden. Zu den bevorzugten Monomeren C12 zählen Acrylnitril und Methylmethacrylat. Erfindungsgemäß beträgt der Anteil der Monomeren C12 von 0 bis 49,8, bevorzugt von 0 bis 39 Gew.-%, insbesondere von 0 bis 38 Gew.-%, bezogen auf die Komponenten C12 bis C14.

Des weiteren ist die Pfropfgrundlage aus einer Vernetzerkomponente C13 aufgebaut. Deren Anteil beträgt von 0,1 bis 25 Gew.-%, bevorzugt von 0,5 bis 10 Gew.-%, besonders bevorzugt von 1 bis 5 Gew.-%, bezogen auf die Komponenten C11 bis C14. Die Vernetzerkomponente kann Dihydrodicyclopentadienylacrylat (α) allein oder in Kombination mit mindestens einem anderen Vernetzer mit zwei oder mehr funktionellen Gruppen unterschiedlicher Reaktivität (β) enthalten. Erfindungsgemäß besteht die Vernetzerkomponente aus 0,1 bis 100, bevorzugt von 25 bis 100 Gew.-%, bezogen auf α und β, aus α und von 0 bis 99,9, bevorzugt von 0 bis 75 Gew.-%, bezogen auf α und β, aus β. Besonders bevorzugt enthält die Vernetzerkomponente von 50 bis 100 Gew.-% α und von 0 bis 50 Gew.-% β.

Beispiele geeigneter Vernetzer β sind ethylenisch ungesättigte Monomere, die Epoxy-, Hydroxy-, Carboxyl-, Amino- oder Säureanhydridgruppen tragen. Hierzu zählen Hydroxyalkylacrylate oder Hydroxyalkylmethacrylate wie Hydroxy-C₁- bis C₁₀-alkylacrylate oder Hydroxy-C₁- bis C₁₀-alkylmethacrylate, insbesondere Hydroxyethylacrylat oder Hydroxy-n-propylacrylat. Ferner kommen Allylmethacrylat, Methallylmethacrylat, Acryloylalkoxysilane oder Methacryloylalkyloxysilane der allgemeinen Formel III 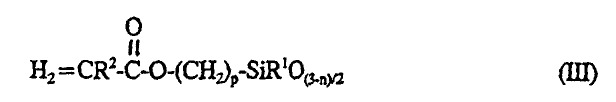 in Betracht, worin R¹ C₁ bis C₃-Alkyl oder Phenyl, bevorzugt Methyl bedeutet, R² Wasserstoff oder Methyl ist, n eine ganze Zahl von 0 bis 2 und p eine ganze Zahl von 1 bis 6, bevorzugt von 1 bis 4 darstellt.

Darüber hinaus kann die Pfropfgrundlage C1 erfindungsgemäß von 0 bis 25, bevorzugt von 0,1 bis 10 Gew.-%, bezogen auf die Komponenten C11 bis C14, mindestens eines Vernetzers mit zwei oder mehr funktionellen Gruppen gleicher Reaktivität C14 in Mengen von 1 bis 5 Gew.-%, bezogen auf die Komponenten C11 bis C14, enthalten. Prinzipiell können die Komponenten C13 und C14 in jedem Verhältnis zueinander stehen. Bevorzugte Pfropfgrundlagen C enthalten jedoch die Komponenten C13 und C14 im Verhältnis von 1 : 0,75 bis 1 : 5. Der Anteil der Komponente C14 kann aber auch darunter liegen, beispielsweise bis 1 : 0,5 betragen. Auch kommen höhere Anteile an C14 in in Betracht. So können die Verhältnisse von C13 zu C14 bis 1 : 10 betragen. Besonders bevorzugt betragen die Verhältnisse von C13 zu C14 von 1 : 0,8 bis 1 : 3, oder 1 : 1 bis 1 : 3, insbesondere von 1 : 0,9 bis 1 : 2, beispielsweise 1 : 1 oder 1 : 1,5.

Geeignete Vernetzer C14 sind zum Beispiel Mono-, Di-, Tri- oder Tetra-Alkylenglykoldiacrylate, bevorzugt C₁- bis C₄-Mono-Alkylenglykoldiacrylate wie Ethylenglykoldiacrylat, n-Propylenglykoldiacrylat, 1,3-n-Butylenglykoldiacrylat oder 1,4-n-Butylenglykoldiacrylat. Ebenso kommen Mono-, Di-, Tri- oder Tetra-Alkylenglykoldimethacrylate in Betracht, bevorzugt C₁- bis C₄-Mono-Alkylenglykoldimethacrylate wie Ethylenglykoldimethacrylat, n-Propylenglykoldimethacrylat, 1,3-n-Butylenglykoldimethacrylat oder 1,4-n-Butylenglykoldimethacrylat. Acrylate oder Methacrylate von Glycerin, Trimethylolpropan, Pentaerythrit, Inosit oder ähnlicher Zuckeralkohole sind auch geeignete Vernetzer C14. Als weitere geeignete Vernetzer C14 sind Acryl- oder Methacrylamide von Ethylendiamin oder anderen aliphatischen Di- oder Polyaminen zu nennen. Darüber hinaus können Diallylmaleat, Diallylfumarat oder Diallylphthalat, Triacryl- oder Trimethacrylamide, Triallylcyanurat oder Triallylisocyanurat sowie Vinylbenzole wie Divinylbenzol oder Trivinylbenzol als Vernetzer C14 verwendet werden.

Die Wahl des Vernetzers C14 richtet sich danach, welche Art Netzwerk die Pfropfgrundlage C1 aufweisen soll. Ein kompaktes Netzwerk ergibt sich beispielsweise, wenn Vernetzer α zusammen mit Divinylbenzol verwendet wird, während ein relativ lockeres Netzwerk erhalten wird, wenn zum Beispiel Vernetzer α zusammen mit Tetraethylenglykoldiacrylat oder -di-methacrylat eingesetzt wird. Zu den besonders bevorzugten Vernetzermischungen zählen Dihydrodicyclopentadienylacrylat und Butandioldiacrylat; Dihydrodicyclopentadienylacrylat und Divinylbenzol; Dihydrodicyclopentadienylacrylat und Diethylenglykoldiacrylat sowie Dihydrodicyclopentadienylacrylat und Tetraethylenglykoldimethacrylat.

Des weiteren sind bevorzugt Dihydrodicyclopentadienylacrylat, Butandioldiacrylat und Allylmethacrylat; Dihydrodicyclopentadienylacrylat, Butandioldiacrylat und Hydroxyethylacrylat; Dihydrodicyclopentadienylacrylat, Butandioldiacrylat und Divinylbenzol; Dihydrodicyclopentadienylacrylat, Hydroxyethylacrylat und Divinylbenzol oder Diethylenglykoldiacrylat oder Tetraethylenglykoldimethacrylat; Dihydrodicyclopentadienylacrylat, Hydroxyethylacrylat, Allylmethacrylat und Divinylbenzol oder Diethylenglykoldiacrylat oder Tetraethylenglykoldimethacrylat; Dihydrodicyclopentadienylacrylat, Allylmethacrylat, β-Methacrylolyloxyethyldimethoxymethylsilan und Divinylbenzol oder Diethylenglykoldiacrylat oder Tetraethylenglykoldimethacrylat; Dihydrodicyclopentadienylacrylat, β-Methacryloyloxyethyldimethoxymethylsilan und Divinylbenzol oder Diethylenglykoldiacrylat oder Tetraethylenglykoldimethacrylat.

Die Pfropfgrundlage C1 hat in der Regel eine Teilchengröße (d₅₀) von 50 nm oder mehr, beispielsweise 80 nm oder darüber. Im allgemeinen werden Teilchengrößen (d₅₀) von 1000 nm nicht überschritten. Die erfindungsgemäßen Pfropfgrundlagen können aber auch größere Teilchengrößen (d₅₀) haben, beispielsweise bis zu 1200 nm. Besonders bevorzugt hat die Pfropfgrundlage C1 eine Teilchengröße (d₅₀) im Bereich von 50 bis 800 nm, insbesondere von 200 bis 500 nm, zum Beispiel 250 bis 400 nm. Bei der Angabe der mittleren Teilchengröße handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt werden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert.

Die Pfropfgrundlage C1 hat in der Regel Gelgehalte von mindestens 90%, bevorzugt mindestens 95%, wobei der Gelgehalt als Verhältnis von im Lösungsmittel (Toluol) unlöslicher Masse zu Gesamtmasse definiert ist. Als Quellungsindex wird das Verhältnis von im Lösungsmittel (Toluol) gequollener zu ungequollener Masse bezeichnet. Er beträgt für die Pfropfgrundlage im allgemeinen von 7 bis 15.

Vorzugsweise ist die Pfropfgrundlage C1 aus Styrol und Dihydrodicyclopentadienylacrylat aufgebaut. Bevorzugt ist ein Gewichtsverhältnis von 95 bis 99 Gew.-% Styrol und 1 bis 5 Gew.-% Dihydrodicyclopentadienylacrylat (DCPA). Besonders bevorzugt ist ein Anteil von 2 Gew.-% DCPA.

Vorzugsweise ist die Pfropfauflage C2 aus mindestens einem C₁₋₈-Alkyl(meth)acrylat und DCPA aufgebaut, insbesondere aus n-Butylacrylat und DCPA. Dabei beträgt der Anteil an DCPA 1 bis 5 Gew.-%, insbesondere etwa 2 Gew.-%.

Vorzugsweise ist mindestens die äußerste der weiteren Pfropfauflagen C3 aus Styrol und Acrylnitril aufgebaut. Dabei beträgt der Anteil an Acrylnitril vorzugsweise 10 bis 40 Gew.-%, insbesondere etwa 25 Gew.-%.

### Komponente D

Die erfindungsgemäßen thermoplastischen Formmassen enthalten die Komponente D in einer Menge von 0 bis 80 Gew.-%. Bei Formmassen mit Komponente B beträgt der Anteil vorzugsweise 0 bis 20 Gew.-%, besonders bevorzugt 0 bis 15 Gew.-%. Bei Formmassen ohne Komponente B beträgt der Anteil vorzugsweise 5 bis 50 Gew.-%, besonders bevorzugt 10 bis 30 Gew.-%.

Komponente D ist ein halogenfreies, thermoplastisches Copolymerisat aus
d₁) 50 bis 95 Gew.-% vorzugsweise 60 bis 80 Gew.-% Styrol oder substituierten Styrolen der allgemeinen Formel C₆H₅(R')C=CH₂ mit R' = C₁₋₈-Alkyl, wobei der Phenylrest 1 bis 3 C₁₋₈-Alkylreste als Substituenten tragen kann, oder Methylmethacrylat oder deren Mischungen als Komponente D1,
d₂) 5 bis 50 Gew.-% vorzugsweise 20 bis 40 Gew.-% Acrylnitril, Methacrylnitril, Methylmethacrylat, Maleinsäureanhydrid oder deren Mischungen als Komponente D2.

Die Copolymerisate D sind harzartig, thermoplastisch und kautschukfrei. Besonders bevorzugte Copolymerisate D) sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid. Es können auch mehrere der beschriebenen Copolymere gleichzeitig eingesetzt werden.

Die Copolymerisate D) sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 auf, dies entspricht mittleren Molekulargewichten Mw (Gewichtsmittelwert) von 40 000 bis 2 000 000.

Besonders bevorzugt ist Komponente D aus Styrol und Acrylnitril aufgebaut. Dabei beträgt der Anteil an Acrylnitril vorzugsweise 20 bis 40, besonders bevorzugt 18 bis 35 Gew.-%.

### Komponente E

Die erfindungsgemäßen thermoplastischen Formmassen enthalten Komponente E in einer Menge von 0 bis 30, vorzugsweise 0 bis 20, besonders bevorzugt 0 bis 10 Gew.-%. Vorzugsweise handelt es sich bei Komponente E um mindestens ein Ethylencopolymer, das insbesondere Carboxylgruppen aufweist.

Vorzugsweise ist das Ethylencopolymer der Komponente E ein Copolymer aus den Komponenten E1 bis E4, deren Gesamtgewicht insgesamt 100 Gew.-% ergibt,
e1: 50 bis 98,9 Gew.-%, vorzugsweise 60 bis 97,8 Gew.-% Ethylen als Komponente E1,
e2: 1 bis 49,9, Gew.-%, vorzugsweise 2 bis 39,8 Gew.-% mindestens eines C₁₋₈-Alkylacrylats als Komponente E2,
e3: 0,1 bis 20 Gew.-%, vorzugsweise 0,2 bis 15 Gew.-% mindestens einer α,β-ungesättigen Carbonsäure oder eines Derivats davon als Komponente E3,
e4: 0 bis 10 Gew.-%, vorzugsweise 0 bis 5 Gew.-% weitere copolymerisierbare Monomere als Komponente E4.

Geeignete derartige Polymere sind beispielsweise in der DE-A 42 27 742 beschrieben.

Als C₁₋₈-Alkylacrylat kommen vorzugsweise n-Butylacrylat und/oder Ethylhexylacrylat, speziell n-Butylacrylat zum Einsatz.

Beispiele geigneter α,β-ungesättigter Carbonsäuren sind Acrylsäure, Methacrylsäure, Ethacrylsäure, Maleinsäure und Fumarsäure. Diese können auch in Form ihrer Ester, Säureanhydride, Säurenhalogenide oder Amide eingesetzt werden. Bevorzugt werden Acrylsäure oder Methacrylsäure eingesetzt. Als weitere copolymerisierbare Monomere kommen beispielsweise polare Comonomere, wie Nitrilgruppen und Halogenatome enthaltende aliphatische Vinylmonomere in Betracht.

Als weitere copolymerisierbare Monomere kommen C₃₋₈-Alk-1-ene, wie Propen, 1-Buten, 1-Penten und 1-Hexen in Betracht.

Ein bevorzugtes Ethylencopolymer enthält neben Ethen nur n-Butylacrylat und Acrylsäure. Dabei beträgt der Anteil an n-Butylacrylat vorzugsweise 25 bis 45 Gew.-%, an Acrylsäure 2 bis 10 Gew.-%. Das Ethylencopolymer weist vorzugsweise einen Schmelzflußindex von 10 ml/10 min bei 190 °C und einer Belastung von 2,16 kg auf.

Die Herstellung der Ethylencopolymere kann nach üblichen Hochdruckpolymerisationsverfahren erfolgen, wie sie beispielsweise in Ullmann's Enzyklopädie der Technischen Chemie, 4. Auflage, Band 19 (1980), Seite 169 bis 175, Verlag Chemie, Weinheim beschrieben sind. Die Copolymerisation des Ethens erfolgt dabei vorzugsweise bei Drücken von 350 bis 5000 bar, vorzugsweise 1500 bis 3000 bar. Die Temperaturen betragen dabei üblicherweise 50 bis 450 °C, vorzugsweise 150 bis 350 °C. Es kann ferner auf die EP-A 0 131 707 verwiesen werden.

### Komponente F

Die erfindungsgemäßen thermoplastischen Formmassen enthalten die Komponente F in einer Menge von 0 bis 60 Gew.-%. Ist Komponente B enthalten, so beträgt der Anteil vorzugsweise 0 bis 35 Gew.-%, besonders bevorzugt 0 bis 20 Gew.-%. Ist keine Komponente B enthalten, so beträgt der Anteil vorzugsweise 5 bis 50 Gew.-%, besonders bevorzugt 10 bis 45 Gew.-%.

Bei den faser- oder teilchenförmigen Füllstoffen handelt es sich vorzugsweise um Kohlenstofffasern, oder insbesondere Glasfasern. Die verwendeten Glasfasern können aus E-, A- oder C-Glas sein und sind vorzugsweise mit einer Schlichte und einem Haftvermittler ausgerüstet. Der Durchmesser liegt im allgemeinen zwischen 6 und 20 im. Es können sowohl endlos Fasern (rovings) als auch Schnittglasfasern mit einer Länge von 1 bis 10 mm, vorzugsweise 3 bis 6 mm, eingesetzt werden. Weiterhin können Füll- oder Verstärkungsstoffe, wie Glaskugeln, Mineralfasern, Whisker, Aluminiumoxidfasern, Glimmer, Kaolin, Talk, Quarzmehl und Wollastonit zugesetzt werden. Außerdem können Metallflocken (wie Metallflocken der Transmed Corp.), Metallpulver, Metallfasern, metallbeschichtete Füllstoffe (wie nickelbeschichtete Glasfasern) sowie andere Zuschlagstoffe, die elektromagnetische Wellen abschirmen, eingesetzt werden. Insbesondere kommen Al-Flocken, (K 102 der Transmed) für EMI-Zwecke (Electromagnetic Interference) in Betracht. Ferner können die Formmassen mit zusätzlichen Kohlenstofffasern, Leitfähigkeitsruß oder nickelbeschichteten C-Fasern abgemischt werden.

Eine allgemeine Beschreibung geeigneter faser- oder teilchenförmiger Füllstoffe findet sich in Gächter/Müller, Kunststoff-Additive, 3. Auflage, Hansa-Verlag, 1990.

### Komponente G

Die erfindungsgemäßen thermoplastischen Formmassen enthalten die Komponente i G in einer Menge von 0 bis 20 Gew.-%, vorzugsweise 0 bis 10 Gew.-%. Liegt Komponente B vor, so beträgt der Anteil besonders bevorzugt 0,5 bis 2 Gew.-%. Liegt keine Komponente B vor, so beträgt der Anteil besonders bevorzugt 0 bis 5 Gew.-%.

Als weitere Zusatzstoffe können die allgemein in Polyester/Polycarbonat-Blends eingesetzten Zusatzstoffe Verwendung finden. Beispielsweise kann es sich dabei um Verarbeitungshilfsmittel und Stabilisatoren, wie UV-Stabilisatoren, Schmiermittel, Phosphorstabilisatoren und Antistatika handeln. Weitere Inhaltstoffe sind Farbstoffe, Pigmente oder Antioxidantien. Stabilisatoren können der Verbesserung der Thermostabilität, Erhöhung der Lichtstabilität, dem Anheben der Hydrolysebeständigkeit und der Chemikalienbeständigkeit dienen. Schmier- und Gleitmittel sind insbesondere bei der Herstellung von Formkörpern oder Formteilen zweckmäßig.

Geeignete Stabilisatoren sind die üblichen gehinderten Phenole, aber auch Vitamin E beziehungsweise analog aufgebaute Verbindungen. Auch HALS Stabilisatoren, Benzophenone, Resorcine, Salicylate, Benzotriazole und andere Verbindungen sind geeignet. (Beispielsweise IRGANOX®, TINUVIN®, wie TINUVIN® 770 HALS-Absorber, Bis-2,2,6,6-tetramethyl-4-piperidylsebazat) und TINUVIN® P (UV-Absorber,(2H-Benzotriazol-2-yl)-4-methylphenol), TOPANOL®).

Geeignete Gleit- und Entformungsmittel sind Stearinsäuren und Stearylalkohol, Stearinsäureester bzw. allgemein höhere Fettsäuren, deren Derivate und entsprechende Fettsäuregemische mit 12 bis 30 Kohlenstoffatomen.

Auch Silikonöle, oligomerisches Isobutylen und ähnliche Stoffe kommen als Zusatzstoffe in Frage. Pigmente, Farbstoffe, Farbaufheller, wie Ultramarinblau, Phthalocyanine, Titadoxid, Cadmiumsulfude, Derivate der Perylentetracarbonsäure sind ebenfalls einsetzbar.

Zudem können als Komponente G Umesterungsschutzmittel wie Irgaphos® P-EPQ Tetrakis-(2,4-di-tert.-butylphenyl)-4,4'-diphenylendiphosphonit von Ciba-Geigy oder Phosphate, wie Monozinkphosphat eingesetzt werden. Als Antioxidanten werden phenolische Antioxidanten bevorzugt. Als UV-Stabilisatoren werden Triazole bevorzugt.

### Herstellung der Formmassen

Die erfindungsgemäßen Formmassen werden durch Mischen der Komponenten A, C und gegebenenfalls B, D bis G hergestellt. Die Reihenfolge, in der die Komponenten gemischt werden, ist beliebig.

Die erfindungsgemäßen Formmassen können an sich bekannten Verfahren, beispielsweise Extrusion, hergestellt werden. Die erfindungsgemäßen Formmassen können beispielsweise hergestellt werden, indem man die Ausgangskomponenten in üblichen Mischvorrichtungen wie Schneckenextrudern, vorzugsweise Zweischneckenextrudern, Brabender-Mischern oder Banbury-Mischern sowie Knetern mischt und anschließend extrudiert. Nach der Extrusion wird das Extrudat abgekühlt und zerkleinert. Die Reihenfolge der Mischung der Komponenten kann variiert werden, sie können beispielsweise zwei oder gegebenenfalls drei Komponenten vorgemischt werden, es können aber auch alle Komponenten gemeinsam gemischt werden.

Um eine möglichst homogene Durchmischung zu erhalten, ist eine intensivere Durchmischung vorteilhaft. Dabei sind im allgemeinen mittlere Mischzeiten von 0,2 bis 30 Minuten bei Temperaturen von 230 bis 280°C, bevorzugt 230 bis 260°C erforderlich. Nach der Extrusion wird das Extrudat in der Regel abgekühlt und zerkleinert. Die erfindungsgemäßen Formmassen zeigen eine gute Balance von Kerbschlagzähigkeit, Schädigungsarbeit, Verarbeitungsstabilität und Witterungsbeständigkeit. Aufgrund der genannten Eigenschaften und der hohen Wärmeformbeständigkeit sind die Formmassen zur Herstellung von Formkörpern geeignet, die beispielsweise im Haushalts-. Elektro-, Kraftfahrzeug- und Medizintechnikbereich eingesetzt werden können.

Dabei können die erfindungsgemäßen thermoplastischen Formmassen nach den bekannten Verfahren der Thermoplastverarbeitung bearbeitet werden, beispielsweise durch Extrudieren, Spritzgießen, Kalandrieren, Hohlkörperblasen, Pressen oder Sintern.

Die Erfindung wird nachstehend anhand von Beispielen näher erläutert.

### Beispiele

### Komponente A

Polybutylenterephthalat, charakterisiert durch eine Viskositätszahl von 130 ml/g (gemessen in 0,5 %iger o-Dichlorbenzol/Phenol-Lösung).

### Komponente B

Polycarbonat auf Basis von Bisphenol A, charakterisiert durch eine Viskositätszahl von 61,2 ml/g gemessen in 0,5 Gew.-%iger CH₂Cl-Lösung bei 23°C.

### Herstellung des Pfropfcopolymerisates 1C

### a) Herstellung des Polystyrol-Kernes

5000 g Wasser, 5 g des Na-Salzes einer C₁₂- bis C₁₈-Paraffinsulfonsäure, 3 g Kaliumperoxodisulfat, 3 g Natriumhydrogencarbonat und 1 g Natriumpyrophosphat wurden unter Rühren und unter Stickstoff auf 70°C erwärmt. Ein Gemisch aus 720 g Styrol und 14 g Dihydrodicyclopentadienylacrylat (DCPA) wurde innerhalb von 3 Stunden zugegeben. Nach Beendigung der Monomerzugabe wurde die Emulsion noch 2 Stunden bei 65°C gehalten. Der so erhaltene Polystyrol-Saatlatex hat einen mittleren Teilchendurchmesser d₅₀ von 90 nm. Der Feststoffgehalt der Polystyrol-Saatlatexemulsion betrug 12,5%.

### b) Herstellung der Polybutylenacrylat-Schale

5750 g der Grundstufe wurden mit weiteren 250 g Wasser versetzt, und 9 g Kaliumperoxodisulfat sowie 10 g Natriumhydrogencarbonat und 1 g Natriumphosphat wurden zugegeben. Unter Rühren wurden bei 65°C 2850 g Butylacrylat und 59 g DCPA innerhalb von 3 h zugegeben. Danach wurde 2 Stunden bei der gleichen Temperatur nachgerührt. Der Polystyrol-Kern hatte einen mittleren Teilchendurchmesser von 150 nm (Feststoffgehalt = 39,7 %).

### c) Herstellung der Pfropfhülle

4280 g der so erhaltenen Dispersion wurden mit 5 g Kaliumperoxodisulfat und 6 g des Na-Salzes einer C₁₂- bis C₁₈-Paraffinsulfonsäure sowie weiteren 2700 g Wasser versetzt. Zunächst wurden innerhalb 1 h 380 g Styrol (1 h Nachrührzeit) und dann innerhalb 2 Stunden weitere 570 g Styrol und 190 g Acrylnitril unter Rühren zugegeben. Es wurden Teilchen mit einem mittleren Durchmesser von 180 nm erhalten. Der Feststoffgehalt der Dispersion betrug 35%.

### Herstellung des Pfropfcopolymerisates 2C

### a) Herstellung des Polystyrol-Kerns

700 g Wasser, 3,4 g des Natriumsalzes einer C₁₂- bis C₁₈-Paraffinsulfonsäure, 1,75 g Kaliumperoxodisulfat, 2,5 g Natriumhydrogencarbonat, 1 g Natriumpyrophosphat und 50 g eines Polystyrol-Saatlatexes (Feststoffgehalt = 38,7%, d₅₀ = 85 nm) wurden auf 70°C erwärmt. Anschließend wurde ein Gemisch aus 550 g Styrol, 11,5 g DCPA und 10 g Divinylbenzol innerhalb von 2 Stunden zugegeben. Nach Beendigung der Monomerzugabe wurde die Emulsion noch eine Stunde bei 65°C gehalten.

Der Polystyrol-Kern hatte einen mittleren Teilchendurchmesser d₅₀ von 250 nm. Die Emulsion hatte einen Feststoffgehalt von 38,5%.

### b) Herstellung der Polybutylacrylat-Schale

Zur erhaltenen Emulsion wurden 10 g des Natriumsalzes einer C₁₂- bis C₁₈-Paraffinsulfonsäure, 6,5 g Kaliumperoxodisulfat, 5 g Natriumhydrogencarbonat und 2 g Natriumpyrophosphat sowie 2490 g Wasser gegeben. Bei 65°C wurden 1730 g Butylacrylat und 35 g DCPA innerhalb von 3,5 h zugegeben und danach weitere 2 h bei 65°C gerührt.
(d₅₀ = 420 nm, Feststoffgehalt = 38,6%).

### c) Herstellung der Polystyrol/acrylnitril-Pfropfhülle

6070 g der so erhaltenen Emulsion wurden mit 2600 g Wasser verdünnt und 5 g des Natriumsalzes einer C₁₂- bis C₁₈-Paraffinsulfonsäure und 4,5 g Kaliumperoxodisulfat zugegeben. Bei 65°C wurde ein Gemisch aus 790 g Styrol und 260 g Acrylnitril innerhalb von 2 h zugetropft und weitere 2 h bei 65°C nachgerührt.
(d₅₀ = 500 nm, Feststoffgehalt = 34,8%).

Die Pfropfpolymerisate 1C und 2C wurden mittels Calciumchloridlösung bei 95°C aus der Emulsion gefällt, mit Wasser gewaschen und im warmen Luftstrom getrocknet.

### Für Vergleichsversuche wurden verwendet:

### 3C: ASA-Pfropfkautschuk, das folgendermaßen hergestellt wurde:

### a) Herstellung des Latex

16 g Butylacrylat und 0,4 g Tricyclodecenylacrylat werden in 150 g Wasser unter Zusatz von 1 g des Natriumsalzes einer C₁₂-C₁₈-Paraffinsulfonsäure, 0,3 g Kaliumpersulfat, 0,3 g Natriumhydrogencarbonat und 0,15 g Natriumpyrophosphat unter Rühren auf 60°C erwärmt. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt und die Teilchengrößenverteilung war eng (Quotient Q = 0,29).

### c) Herstellung der Pfropfhülle

150 g des nach a) erhaltenen Polybutylacrylat-Latex wurden mit 40 g einer Mischung aus Styrol und Acrylnitril (Gewichtsverhältnis 75 : 25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 91 nm.

### 4C: ASA-Pfropfkautschuk, das folgendermaßen hergestellt wurde:

### a) Herstellung des Latex

Zu einer Vorlage aus 1,5 g des nach 3 C a) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer C₁₂-C₁₈-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt, die Teilchengrößenverteilung war eng (Q = 0,1).

c) 150 g des nach a) hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfinischpolymerisation erhaltene Dispersion wurde dann mit 20 g eines Gemisches aus Styrol und Acrylnitril im Gewichtsverhältnis 75 : 25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

### 5C: Methacrylat/Butadien/Styrol-Pfropfkautschuk mit dreischaligem Aufbau (Polybutadien-Kern, Polystyrol-Schale, PMMA-Schale) 15,6 Gew.-% Methylmethacrylat 16,7 Gew.-% Styrol, 67,7 Gew.-% Butadien.

### Komponente D

Copolymer aus 81 Gew.-% Styrol und 19 Gew.-% Acrylnitril mit einer Viskositätszahl von 72 ml/g gemessen in einer 0,5 Gew.-% igen Lösung in Dimethylformamid bei 23°C.

### Komponente F1

Talkum charakterisiert durch folgende Teilchengrößenkennwerte: X₁₀ = 1,7 im, X₉₀ = 10,82 im.

### Komponente F2

Glasfaser, die mit einer Epoxy-Schlichte ausgerüstet war.

### Komponente G

Tetrakis-(2,4-di-tert.butylphenyl)-4,4'-diphenylen-diphosphonit. (Umesterungsschutzmittel).

### Herstellung und Prüfung der Formmassen

Zum Mischen der Komponenten wurde ein Zweiwellenextruder verwendet. Die Schmelze wurde durch ein Wasserbad geleitet und granuliert.

Des weiteren wurden die mechanischen Eigenschaften der mittels Extruder hergestellten Proben bestimmt.

Die Wärmebeständigkeit wurde nach HDT B ermittelt. Die Kerbschlagzähigkeit der Produkte wurde an ISO-Stäben nach ISO 179 1eA bestimmt. Die Schädigungsarbeit der Formmassen wurde nach DIN 53 433 bei -30°C gemessen.

Zur Charakterisierung der Witterungsbeständigkeit wurden Rundscheiben beziehungsweise ISO-Stäbe für 500 h einem Xenontest nach DIN 53387 Verfahren-AX (Xenontest 1200 CPS von Atlas) unterzogen. Danach wurde die Schädigungsarbeit bei -30°C bestimmt.

Die Dimensionsbeständigkeit wurde anhand des linearen Ausdehnungskoeffizienten beurteilt, der nach DIN 53 752, Verfahren A an jeweils 2 Probekörpern (10 x 10 x 4) bestimmt wurde. Angegeben sind die in Längsrichtung bei 25°C gemessenen Werte (CTE).

Bei den verstärkten Formmasssen wurden des weiteren die ungekerbte Schlagzähigkeit nach ISO 179 1eU sowie die Reißfestigkeit (bestimmt nach ISO 527) zur Charakterisierung verwendet.

Die Zusammensetzungen der Formmassen und die Ergebnisse der Prüfungen sind in den Tabellen 1 (Polyester/Polycarbonat-Blends, zum Teil mit Styrol/Acrylnitril-Copolymer) und 2 (Polyester/Poly(styrol/acrylnitril)-Blends) aufgeführt.

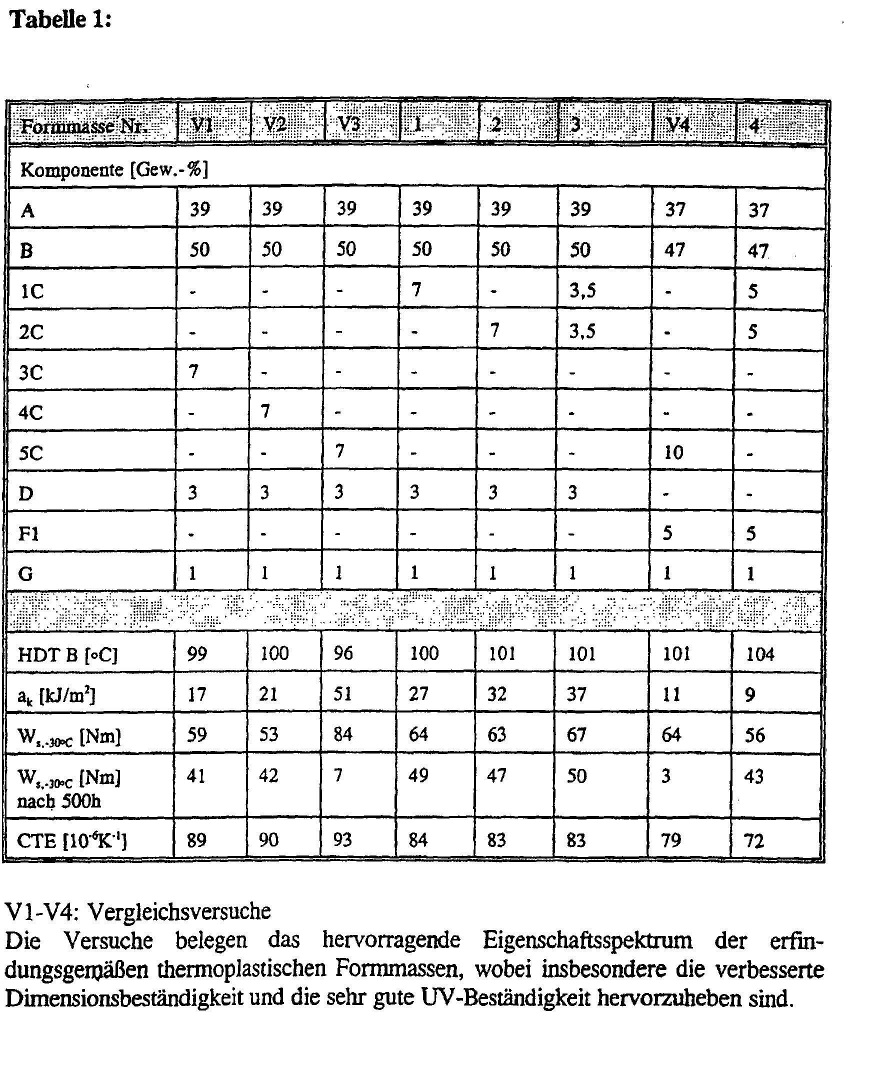

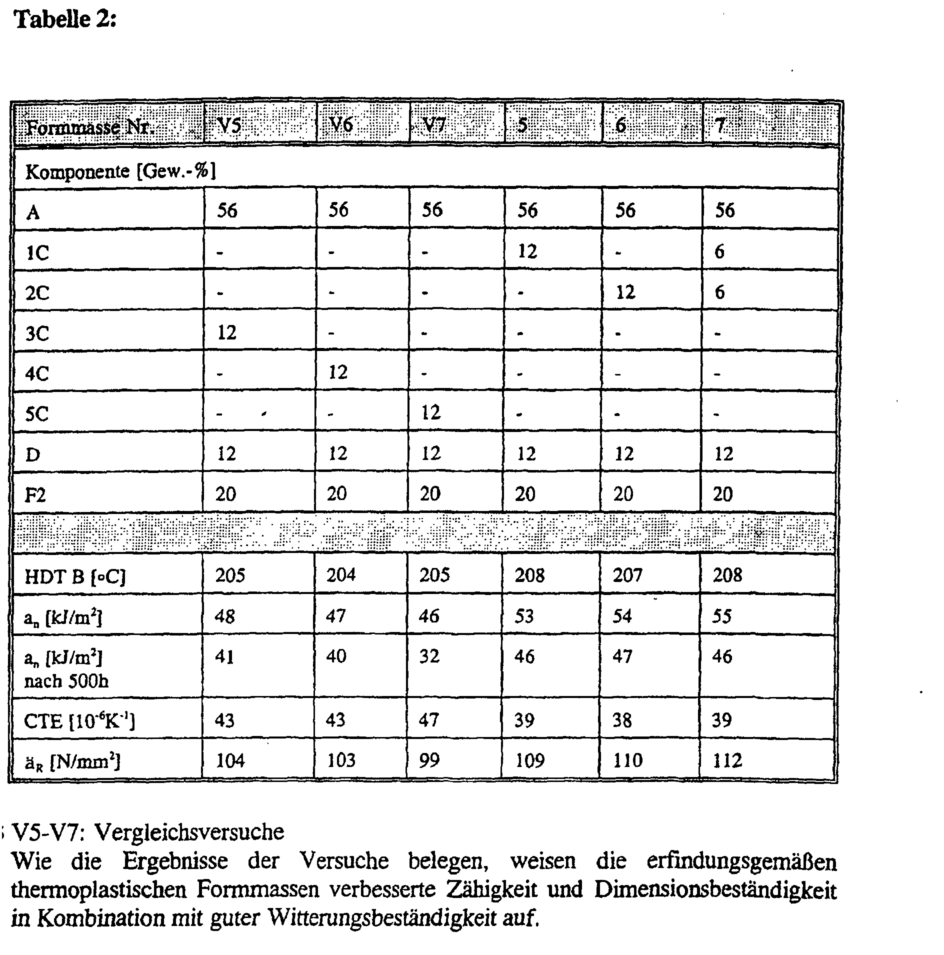

## Patentansprüche

1. Thermoplastische Formmasse, enthaltend, bezogen auf das Gesamtgewicht der Komponenten A, C und gegebenenfalls B, D bis G, das insgesamt 100 Gew.-% ergibt,
a: 1 bis 99 Gew.-% mindestens eines Polyesters mit einer relativen Viskosität von 1,2 bis 1,8 gemessen als 0,5 Gew.-%ige Lösung in einem Phenol/o-Dichlorbenzol Gemisch (1:1) bei 25°C als Komponente A,
b: 0 bis 98 Gew.-% mindestens eines Polycarbonats mit einer relativen Viskosität von 1,10 bis 1,50 gemessen als 0,5 Gew.-%ige Lösung in einem Phenol/o-Dichlorbenzol Gemisch (1:1) bei 25°C als Komponente B,
c: 1 bis 80 Gew.-% eines Pfropfcopolymerisats C aus den Komponenten C1, C2 und C3, deren Gesamtgewicht 100 Gew.-% ergibt,
c1: 1 bis 95 Gew.-% einer Pfropfgrundlage aus einem Material mit einer Glasübergangstemperatur von mindestens 25°C und einer mittleren Teilchengröße von mindestens 50 nm und einem Gelgehalt von mindestens 90 % wobei der Gelgehalt als Verhältnis von im Lösungsmittel (Toluol) unlöslicher Masse zu Gesamtmasse definiert ist, als Komponente C1, aufgebaut aus den Komponenten C11 bis C14, deren Gesamtgewicht 100 Gew.-% ergibt,
c11: 50 bis 99,9 Gew.-% mindestens eines vinylaromatischen Monomeren als Komponente C11,
c12: 0 bis 49,9 Gew.-% mindestens eines mit den Monomeren C11 copolymerisierbaren Monomeren als Komponente C12,
c13: 0,1 bis 25 Gew.-% einer Vernetzerkomponente C13 aus
α) 0,1 bis 100 Gew.-% Dihydrodicyclopentadienylacrylat und
β) 0 bis 99,9 Gew.-% mindestens eines weiteren Vernetzers, ausgewählt aus ethylenisch ungesättigten Monomeren, die Epoxy-, Hydroxy-, Carboxyl-, Amino- oder Säureanhydridgruppen tragen, (Meth)allylmethacrylat und (Meth)acryloylalkoxysilanen der allgemeinen Formel (III)
H₂C = CR²-C(O)O-(CH₂)ₚ-SiR¹O_{(3-n)/2} (III)
worin R¹ C₁₋₃-Alkyl oder Phenyl, R² Wasserstoff oder Methyl bedeutet und n eine ganze Zahl von 0 bis 2 und p eine ganze Zahl von 1 bis 6 bedeutet, mit zwei oder mehr funktionellen Gruppen unterschiedlicher Reaktivität und
c14: 0 bis 25 Gew.-% mindestens eines Vernetzers C14 mit zwei oder mehr funktionellen Gruppen gleicher Reaktivität,
c2: 4,9 bis 98,9 Gew.-% einer Pfropfauflage aus einem Material mit einer Glasübergangstemperatur von höchstens 0°C als Komponente C2, aufgebaut aus den Komponenten C21 bis C23, deren Gesamtgewicht 100 Gew.-% ergibt,
c21: 50 bis 100 Gew.-% mindestens eines C₁₋₈-Alkyl(meth)acrylates als Komponente C21,
c22: 0 bis 50 Gew.-% mindestens eines mit den Monomeren C21 copolymerisierbaren Monomeren als Komponente C22 und
c23: 0 bis 20 Gew.-% mindestens eines Vernetzers C13 α und/oder β oder deren Mischung, und
c3: 0,1 bis 90 Gew.-% mindestens einer weiteren Pfropfauflage aus Styrol und Acrylnitril als Komponente C3,
d: 0 bis 80 Gew.-% mindestens eines halogenfreien Styrolcopolymers mit einer Viskositätszahl von 40 bis 160 als Komponente D,
e: 0 bis 30 Gew.-% mindestens eines Kautschuks als Komponente E,
f: 0 bis 60 Gew.-% mindestens eines faser- oder teilchenförmigen Füllstoffs als Komponente F und
g: 0 bis 20 Gew.-% weitere Zusatzstoffe als Komponente G

2. Formmasse nach Anspruch 1, **dadurch gekennzeichnet, daß** der Polyester der Komponente A sich von einer aromatischen Dicarbonsäure ableitet.

3. Formmasse nach Anspruch 1 oder 2, **dadurch gekennzeichnet, daß** das Polycarbonat der Komponente B sich von phenolischen Verbindungen ableitet.

4. Formmasse nach einem der Ansprüche 1 bis 3, **dadurch gekennzeichnet, daß** im Pfropfcopolymerisat der Komponente C die Pfropfgrundlage C1 aus Styrol und Dihydrodicyclopentadienylacrylat aufgebaut ist.

5. Formmasse nach einem der Ansprüche 1 bis 4, **dadurch gekennzeichnet, daß** im Pfropfcopolymerisat der Komponente C die Pfropfauflage C2 aus mindestens einem C₁₋₈-Alkyl(meth)acrylat und Dihydrodicyclopentadienylacrylat aufgebaut ist.

6. Formmasse nach einem der Ansprüche 1 bis 5, **dadurch gekennzeichnet, daß** im Pfropfcopolymerisat der Komponente C mindestens die äußerste der weiteren Pfropfauflagen C3 aus Styrol und Acrylnitril aufgebaut ist.

7. Verfahren zur Herstellung von Formmassen nach einem der Ansprüche 1 bis 6 durch Mischen der Komponenten A und C und gegebenenfalls B und D bis G für eine mittlere Mischzeit von 0,2 bis 30 Minuten bei Temperaturen von 230 bis 280°C.

8. Verwendung von Formmassen nach einem der Ansprüche 1 bis 6 zur Herstellung von Fasern, Folien oder Formkörpern.

9. Fasern, Folien oder Formkörper aus einer Formmasse nach einem der Ansprüche 1 bis 6.

10. Verfahren zur Herstellung von Fasern, Folien oder Formkörpern nach Anspruch 9 durch Extrudieren, Extrusionsblasen oder Spritzgießen.

## Claims

1. A thermoplastic molding composition comprising, based on the total weight of components A, C and, if desired, B and D to G, which is 100% by weight in total,
a: as component A, from 1 to 99% by weight of at least one polyester with relative viscosity of from 1.2 to 1.8, measured on a 0.5% strength by weight solution in a phenol/o-dichlorobenzene mixture (1:1) at 25°C,
b: as component B, from 0 to 98% by weight of at least one polycarbonate with relative viscosity of from 1.10 to 1.50, measured on a 0.5% strength by weight solution in a phenol/o-dichlorobenzene mixture (1:1) at 25°C,
c: from 1 to 80% by weight of a graft copolymer C made from components C1, C2 and C3, the total weight of which is 100% by weight,
c1: as component C1, from 1 to 95% by weight of a graft base made from a material with a glass transition temperature of at least 25°C and with an average particle size of at least 50 nm and a gel content of at least 90%, gel content being defined as the ratio of weight insoluble in the solvent (toluene) to total weight, built up from components C11 to C14, the total weight of which is 100% by weight,
c11: as component C11, from 50 to 99.9% by weight of at least one vinylaromatic monomer,
c12: as component C12, from 0 to 49.9% by weight of at least one monomer copolymerizable with the monomers C11,
c13: from 0.1 to 25% by weight of a crosslinking component C13 made from
α) from 0.1 to 100% by weight of dihydrodicyclopentadienyl acrylate and
β) from 0 to 99.9% by weight of at least one other crosslinking agent selected from the group consisting of ethylenically unsaturated monomers which carry epoxy, hydroxyl, carboxyl, amino, or anhydride groups, (meth)allyl methacrylate, and (meth)acryloylalkoxysilanes of the formula (III)
H₂C=CR²-C(O)O-(CH₂)ₚ-SiR¹O₍₃₋ₙ₎₂ (III)
where R¹ is C₁-C₃-alkyl or phenyl, R² is hydrogen or methyl, and n is an integer from 0 to 2, and p is an integer from 1 to 6, having two or more functional groups of differing reactivity and
c14: from 0 to 25% by weight of at least one crosslinking agent C14 having two or more functional groups of the same reactivity,
c2: as component C2, from 4.9 to 98.9% by weight of a graft made from a material with a glass transition temperature of not more than 0°C, built up from components C21 to C23, the total weight of which is 100% by weight,
c21: as component C21, from 50 to 100% by weight of at least one C₁-C₈-alkyl(meth)acrylate,
c22: as component C22, from 0 to 50% by weight of at least one monomer copolymerizable with the monomers C21 and
c23: from 0 to 20% by weight of at least one crosslinking agent C13 α and/or □ or a mixture of these, and
c3: as component C3, from 0.1 to 90% by weight of at least one other graft made from styrene and acrylonitrile,
d: as component D, from 0 to 80% by weight of at least one halogen-free styrene copolymer with a viscosity number of from 40 to 160,
e: as component E, from 0 to 30% by weight of at least one rubber,
f: as component F, from 0 to 60% by weight of at least one fibrous or particulate filler, and
g: as component G, from 0 to 20% by weight of other additives.

2. A molding composition as claimed in claim 1, wherein the polyester of component A is derived from an aromatic dicarboxylic acid.

3. A molding composition as claimed in claim 1 or 2, wherein the polycarbonate of component B is derived from phenolic compounds.

4. A molding composition as claimed in any one of claims 1 to 3, wherein, in the graft copolymer of component C, the graft base C1 is built up from styrene and dihydrodicyclopentadienyl acrylate.

5. A molding composition as claimed in any one of claims 1 to 4, wherein, in the graft copolymer of component C, the graft C2 is built up from at least one C₁-C₈-alkyl (meth)acrylate and dihydrodicyclopentadienyl acrylate.

6. A molding composition as claimed in any one of claims 1 to 5, wherein, in the graft copolymer of component C, at least the outermost of the other grafts C3 is built up from styrene and acrylonitrile.

7. A process for preparing molding compositions as claimed in any one of claims 1 to 6 by mixing components A and C and, if desired, B and D to G for an average mixing time of from 0.2 to 30 minutes at from 230 to 280°C.

8. The use of molding compositions as claimed in any one of claims 1 to 6 for producing fibers, films or moldings.

9. A fiber, a film or a molding made from a molding composition as claimed in any one of claims 1 to 6.

10. A process for producing fibers, films or moldings as claimed in claim 9 by extrusion, extrusion blow molding or injection.

## Revendications

1. Mélange à mouler thermoplastique, contenant, par rapport au poids total des composants A, C et éventuellement B, D et G, qui en tout fait 100 % en poids,
a : de 1 à 99 % en poids d'au moins un polyester ayant une viscosité relative de 1,2 à 1,8, mesurée en solution à 0,5 % dans un mélange 1:1 de phénol et d'o-dichlorobenzène à 25°C, en tant que composant A,
b : de 0 à 98 % en poids d'au moins un polycarbonate ayant une viscosité relative de 1,10 à 1,50, mesurée en solution à 0,5 % en poids dans un mélange 1:1 de phénol et d'o-dichlorobenzène à 25°C, en tant que composant B,
c : de 1 à 80 % en poids d'un copolymère greffé C des composants C1, C2 et C3, dont le poids total fait 100 % en poids,
c1 : de 1 à 95 % en poids d'une base de greffage en un matériau ayant une température de transition vitreuse d'au moins 25°C et une granulométrie moyenne d'au moins 50 nm, et une teneur en gel d'au moins 90 %, la teneur en gel étant définie par le rapport entre la masse insoluble dans le solvant (toluène) et la masse totale, en tant que composant C1, constitué des composants C11 à C14, dont le poids total fait 100 % en poids,
c11 : de 50 à 99,9 % en poids d'au moins un monomère vinylaromatique, en tant que composant C11,
c12: de 0 à 49,9 % en poids d'au moins un monomère copolymérisable avec les monomères C11, en tant que composant c12,
c13: de 0,1 à 25 % en poids d'un composant de réticulation C13, constitué
α) de 0,1 à 100 % en poids d'acrylate de dihydrodicyclopentadiényle, et,
β) de 0 à 99,9 % en poids d'au moins un autre agent de réticulation, choisi parmi les monomères à insaturation éthylénique portant des groupes époxy, hydroxy, carboxyle, amino ou anhydride d'acide, le méthacrylate de (méth)allyle et les (méth)acryloylalcoxysilanes de formule générale (III)
H₂C=CR²-C(O)O-(CH₂)ₚ-SiR¹O₍₃₋ₙ₎₂ (III)
dans laquelle R¹ est un groupe alkyle en C₁₋₃ ou phényle, R² est un atome d'hydrogène ou le groupe méthyle, et n est un entier de 0 à 2, et p est un entier de 1 à 6, et portant au moins deux groupes fonctionnels ayant des réactivités différentes, et
c14 : de 0 à 25 % en poids d'au moins un agent de réticulation C14 portant au moins deux groupes fonctionnels ayant une réactivité identique,
c2 : de 4,9 à 98,9 % en poids d'une base de greffage en un matériau ayant une température de transition vitreuse d'au plus 0°C, en tant que composant C2, constitué des composants C21 à C23, dont le poids total fait 100 % en poids,
c21 : de 50 à 100 % en poids d'au moins un (méth)acrylate d'alkyle en C₁₋₈, en tant que composant C21,
c22 : de 0 à 50 % en poids d'au moins un monomère copolymérisable avec les monomères C21, en tant que composant C22, et
c23 : de 0 à 20 % en poids d'au moins un agent de réticulation C13 α et/ou β ou de leurs mélanges, et
c3 : de 0,1 à 90 % en poids d'au moins une autre base de greffage constituée de styrène et d'acrylonitrile, en tant que composant C3,
d : de 0 à 80 % en poids d'au moins un copolymère du styrène non halogéné ayant un indice de viscosité de 40 à 160, en tant que composant D,
e : de 0 à 30 % en poids d'au moins un caoutchouc, en tant que composant E,
f : de 0 à 60 % en poids d'au moins une matière de charge sous forme fibreuse ou particulaire, en tant que composant F, et
g : de 0 à 20 % en poids d'autres additifs, en tant que composant G.

2. Mélange à mouler selon la revendication 1, **caractérisé en ce que** le polyester du composant A dérive d'un acide dicarboxylique aromatique.

3. Mélange à mouler selon la revendication 1 ou 2, **caractérisé en ce que** le polycarbonate du composant B dérive de composés phénoliques.

4. Mélange à mouler selon l'une des revendications 1 à 3, **caractérisé en ce que**, dans le polymère greffé du composant C, la base de greffage C1 est constituée de styrène et d'acrylate de dihydrodicyclopentadiényle.

5. Mélange à mouler selon l'une des revendications 1 à 4, **caractérisé en ce que**, dans le copolymère greffé du composant C, la base de greffage C2 est constituée d'au moins un (méth)acrylate d'alkyle en C₁₋₈ et d'acrylate de dihydrodicyclopentadiényle.

6. Mélange à mouler selon l'une des revendications 1 à 5, **caractérisé en ce que**, dans le copolymère greffé du composant C, au moins celle qui est le plus à l'extérieur, parmi les autres bases de greffage C3, est constituée de styrène et d'acrylonitrile.

7. Procédé de préparation de mélanges à mouler selon l'une des revendications 1 à 6, par mélange des composants A et C et éventuellement B et D à G, pendant un temps moyen de mélange de 0,2 à 30 minutes à des températures de 230 à 280°C.

8. Utilisation de mélanges à mouler selon l'une des revendications 1 à 6 pour fabriquer des fibres, des feuilles ou des objets moulés.

9. Fibres, feuilles ou objets moulés obtenus à partir d'un mélange à mouler selon l'une des revendications 1 à 6.

10. Procédé de fabrication de fibres, feuilles ou objets moulés selon la revendication 9 par extrusion, extrusion-soufflage ou moulage par injection.
